# FASCICULE DE BREVET EUROPEEN

(11) **EP 0 760 519 B1**
(45) Date de publication et mention de la délivrance du brevet: **07.07.1999**
(21) Numéro de dépôt: 96401816.2
(22) Date de dépôt: 23.08.1996
(51) Int. Cl.: G21C 3/62, C04B 35/51

(54) **Procédé de fabrication de pastilles de combustible nucléaire à base d'oxyde mixte (U, Pu)O2 avec addition d'un produit organique soufre du type zwitterion**
Verfahren zur Herstellung von Kernbrennstofftabletten auf Basis von (U,PU)02 unter Zugabe von organischen Zwitterion-Schwefelverbindungen
Process for manufacturing nuclear fuel pellets based on (U,PU)02 with addition of an organic sulphur zwitterion compound

(30) Priorité: 25.08.1995 FR 9510088
(43) Date de publication de la demande: 05.03.1997
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: Bauer, Mireille, 04100 Manosque (FR); Marc, Yves, 13100 Aix en Provence (FR); Demarc, Danielle, 13860 Peyrolles en Provence (FR); Seiss, Monique, 04100 Manosque (FR)
(74) Mandataire: Dubois-Chabert, Guy

(56) Documents cités:
- FR-A- 2 622 343
- US-A- 4 314 952
- DATABASE WPI Week 8920 Derwent Publications Ltd., London, GB; AN 87-187426 XP002004564 & JP-A-62 115 398 (NIPPON NUCLEAR FUEL) , 27 Mai 1987

## Description

La présente invention a pour objet un procédé de fabrication de pastilles de combustible nucléaire de type MOX à base d'oxyde mixte (U, Pu)O₂ utilisables dans tout type de réacteur, notamment dans les réacteurs nucléaires à eau, en particulier dans les réacteurs à eau pressurisée.

De façon plus précise, elle concerne un procédé permettant d'obtenir des pastilles frittées de combustible nucléaire présentant des propriétés améliorées en ce qui concerne la microstructure de la pastille avec l'augmentation de la taille de grains du matériau tout en conservant à la fois une aptitude satisfaisante à la dissolution dans les solutions généralement utilisées pour le retraitement des combustibles nucléaires irradiés, et une bonne possibilité de rectification à sec.

Parmi les procédés utilisés jusqu'à présent pour la fabrication de pastilles combustibles nucléaires de ce type, on connaît par le document " Techniques de l'Ingénieur - Génie Nucléaire -B3630-1 à 3630-10 ", un procédé dans lequel on part d'un mélange de poudres de UO₂ et de PuO₂ que l'on soumet à un broyage, un compactage et une granulation suivies d'un pastillage et d'un frittage.

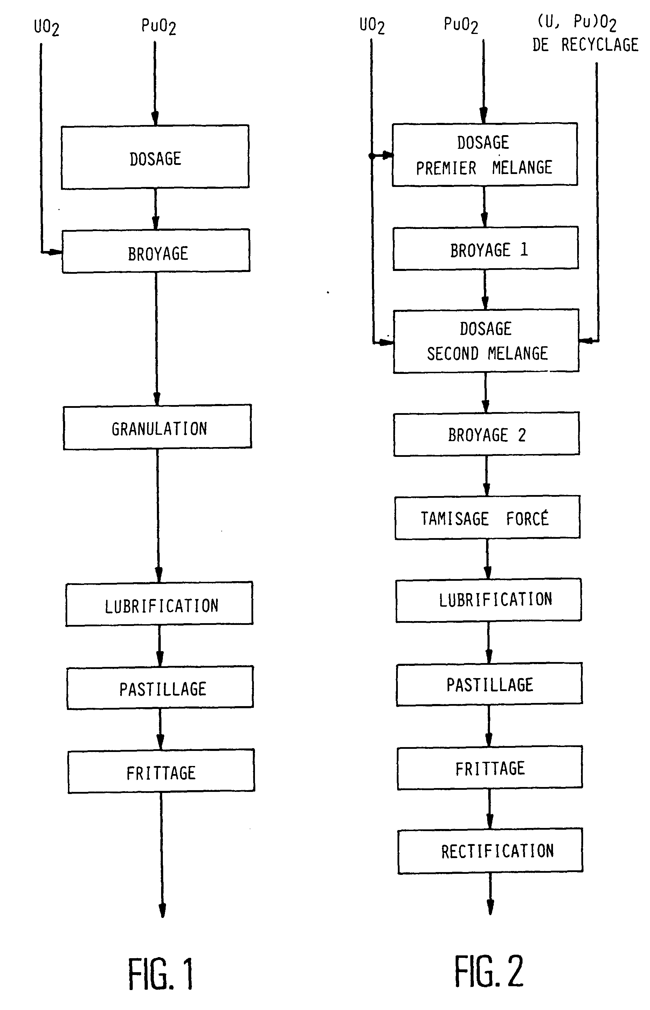

Dans ce procédé, ainsi appelé procédé de "cobroyage direct ", qui est représenté de façon schématique sur la figure 1, on part de poudres d'UO₂ et de PuO₂ que l'on mélange dans les proportions voulues pour obtenir le taux de plutonium désiré, en tenant compte des caractéristiques isotopiques et des rapports métal-oxyde des différents lots de poudres utilisées. Ainsi, dans la première étape de dosage, on mélange les quantités voulues de poudres d'UO₂ et de PUO₂ pour obtenir le taux de plutonium spécifié. On réalise ensuite la deuxième étape de broyage dans des jarres cylindriques contenant des boulets en matériau dur pour détruire les agglomérats de poudres, mélanger intimement les constituants et fragmenter les particules de poudres en augmentant ainsi leur aptitude au frittage. On réalise ensuite la troisième étape de granulation qui consiste à compacter les poudres obtenues précédemment, puis à fractionner les compacts obtenus dans un concasseur et à les tamiser pour obtenir la granulométrie désirée et transformer la poudre en un produit plus dense et grossièrement sphérique. Après cette opération, on réalise l'étape de lubrification qui consiste à ajouter un lubrifiant tel que le stéarate de zinc ou de calcium aux granulés. On réalise ensuite le pastillage par pressage à pression constante du granulé dans des presses alternatives ou rotatives, puis on procède au frittage pour densifier les pastilles et obtenir les caractéristiques finales.

Ce procédé présente l'inconvénient majeur de donner des pastilles de combustible nucléaire dont la structure interne ne leur confère pas une aptitude satisfaisante à la rectification en raison de fissuration et de défauts d'aspect.

Par ailleurs, les pastilles frittées ainsi obtenues, bien que répondant aux spécifications exigées posent toujours certains problèmes pour obtenir ensuite la dissolution complète du plutonium lors des opérations de retraitement des pastilles irradiées. En effet, dans un réacteur nucléaire, ces pastilles sont soumises à des températures élevées, ce qui conduit à l'obtention d'oxyde de plutonium réfractaire difficile à dissoudre.

Le brevet FR-A-2 622 343 décrit un procédé aussi appelé " procédé de double cobroyage " qui constitue en fait une amélioration et une variante du procédé précédent et qui est représenté de façon schématique sur la figure 2, et dans lequel on soumet à un pastillage, puis à un frittage, une charge de poudres de UO₂ et de PuO₂ constituées de particules ayant des granulométries inférieures ou égales à 250µm qui est préparée de la façon suivante : dosage d'un premier mélange de poudres (mélange mère) ayant une teneur en plutonium supérieure à la teneur spécifiée et composés d'UO₂, de PuO₂ et éventuellement de poudres de recyclage qui subit un premier broyage, puis dosage d'un second mélange de poudre par addition de UO₂ et éventuellement de poudres de recyclage. Ce second mélange subit un broyage pendant une durée limitée et un tamisage à travers un tamis ayant des ouvertures de dimensions inférieures ou égales à 250µm.

Ce procédé permet d'obtenir des pastilles dont l'aptitude à la rectification à sec est combinée avec une bonne aptitude à la dissolution au moment du retraitement. Cependant, les pastilles obtenues aussi bien par le procédé de cobroyage direct que par le procédé de double cobroyage qui satisfont aux spécifications exigées sont encore - pour ce qui concerne la rétention des produits en particulier des produits gazeux de fission se formant lors de l'irradiation du combustible - loin de présenter les caractéristiques voulues. Or, il a été mis en évidence par exemple dans le document FR-A-2 424 231 que la microstructure des pastilles frittées et notamment la taille des grains a un effet majeur sur la vitesse d'échappement des produits de fission en particulier des produits gazeux, lors de l'irradiation des combustibles. En effet, une taille de grains comprise entre 20 et 40µm (microns) apparaît favorable à la rétention des gaz de fission tout en conservant au matériau un comportement au fluage satisfaisant.

Il est d'autre part connu par le brevet GB-A-2 019 824, correspondant au brevet FR-A-2 424 231, qu'il est possible de préparer des pastilles de dioxyde d'uranium fritté constitué de gros grains : dans la première étape du procédé, on fait réagir un nitrate d'uranyle avec une source de soufre sous forme liquide, seul l'acide sulfurique étant cité, à une température élevée pour former un trioxyde d'uranium contenant du soufre. Si ce document met en évidence l'influence de la présence d'un composé soufré sur la croissance cristalline, il ne concerne que la préparation de pastilles de dioxyde d'uranium et non de pastilles MOX et implique une réaction du composé soufré liquide avec un nitrate d'uranyle ; ses enseignements ne peuvent donc être appliqués et transposés facilement à la fabrication de pastilles MOX.

Enfin, le brevet japonais JP-A-62 115 398 décrit la préparation d'un combustible nucléaire par mélange d'une poudre d'un seul oxyde choisi parmi UO₂, ThO₂, PuO₂ ou Gd₂O₃, la préparation d'un combustible à base d'un mélange d'oxydes en particulier de type MOX n'est pas mentionnée dans ce document.

Le seul exemple donné concerne la préparation d'un combustible à base uniquement de UO_{2.}

Un produit organique soufré, en particulier le sulfate d'ammonium, l'acide naphtylamine sulfonique ou l'acide xylène sulfonique est incorporé dans le mélange afin, semble t'il, d'améliorer la rétention des gaz de fission et l'interaction entre la pastille et la gaine.

Le mélange est ensuite moulé et généralement préchauffé de manière à faire fondre le composé soufré pour l'incorporer à la poudre.

La pastille obtenue présente une structure hétérogène avec des grains de faibles diamètre en surface et des gros grains dans le coeur de la pastille. Le problème de l'amélioration de l'aptitude à la dissolution, en particulier à la dissolution nitrique du combustible n'est absolument pas évoqué dans ce document où l'on ne donne aucune indication sur la solubilité du combustible.

De plus, ce document ne concernant que la préparation de pastilles de dioxyde d'uranium pur, ses enseignements ne peuvent être facilement transposés à la fabrication de pastilles MOX

Les procédés de broyage ou double cobroyage décrits ci-dessus ayant trait à la fabrication de pastilles d'oxyde mixte, conduisent à l'obtention d'une taille de grains nettement inférieure : de l'ordre de 3 µm à 10 µm. Il existe donc un besoin pour un procédé permettant l'obtention d'un combustible à base d'oxyde mixte et non simplement de dioxyde d'uranium à taille de grain plus élevée, les pastilles obtenues présentant également une excellente aptitude à la dissolution nitrique ainsi qu'une excellente aptitude à la rectification à sec et répondant à l'ensemble des spécifications exigées par ailleurs pour ces pastilles.

La présente invention a donc pour objectif de fournir un procédé permettant de répondre à ces besoins.

Ces objectifs, et d'autres encore sont remplis selon l'invention par un procédé de fabrication de pastilles de combustible nucléaire à base d'oxyde mixte d'uranium et de plutonium à partir d'une charge d'UO₂ et de PuO₂ par pastillage et frittage caractérisé par l'introduction au niveau du cobroyage des poudres, d'un additif organique soufré solide de type zwitterion.

Le procédé selon l'invention comprend donc dans une première variante les étapes successives suivantes :
a) dosage d'un premier mélange de poudres d'UO₂ et de PuO₂ ayant une teneur en plutonium supérieure à la teneur spécifiée avec incorporation d'un produit organique soufré solide de type zwitterion,
b) broyage de ce premier mélange de poudres,
c) tamisage forcé de ce mélange broyé à travers un tamis ayant des ouvertures de dimension inférieure ou égale à 250µm,
d) addition d'une poudre d'UO₂ à ce premier mélange de poudres broyées pour obtenir un second mélange de poudres ayant la teneur spécifiée en plutonium, et
e) mélange par simple brassage de l'ensemble de la charge pour recueillir la charge de poudres qui sera soumise aux opérations de lubrification, pastillage, frittage et éventuellement rectification.

Dans cette première variante du procédé, le fait d'ajouter un produit organique soufré solide de type zwitterion dans l'étape a) permet d'améliorer de manière surprenante, notablement l'homogénéité de répartition du plutonium au sein de ce mélange. De ce fait, un simple brassage mécanique (étape e) s'avère suffisant pour obtenir un combustible après pastillage et frittage répondant en tous points aux spécifications exigées sans qu'il soit nécessaire de recourir à un second broyage. Ainsi, l'étape de tamisage forçage, étape pénalisante du procédé et destinée à éliminer les agglomérats formés au cours du broyage n'est plus réalisée sur la charge complète mais sur le mélange primaire. De plus, ce produit organique soufré permet d'obtenir une taille de grains plus élevée de l'ordre de 20µm à 60µm sur les zones à forte teneur en plutonium, zones relâchant la plus grande quantité de gaz de fission. Dans ce procédé, seules les zones de mélange mère ont été affectées par la présence de l'additif organique soufré, le reste du mélange présentant une taille de grains plus faible, garantissant la bonne tenue au fluage de la pastille.

Le procédé selon l'invention comprend dans une seconde variante les étapes successives suivantes :
a) dosage d'un premier mélange de poudres d'UO₂ et de PuO₂ et éventuellement de poudre de recyclage ayant la teneur en plutonium spécifiée avec incorporation d'un produit organique soufré solide de type zwitterion,
b) broyage de ce premier mélange de poudres, afin d'obtenir une charge de poudres qui sera soumise aux opérations de lubrification, pastillage, frittage et éventuellement rectification.

Il importe de noter que dans le cas de la seconde variante du procédé où l'on broie directement dans les proportions voulues pour obtenir le taux de plutonium spécifiée, l'ajout d'un additif soufré dans la totalité de la charge destinée à être pastillée permet d'augmenter la taille de grains sur l'ensemble de la pastille qui est de 20 µm à 40 µm.

Dans les deux variantes du procédé ci-dessus, dans l'étape a) et/ou dans l'étape d), on peut ajouter également une poudre d'oxyde mixte (U, Pu)O₂ de recyclage qui est obtenue par broyage des rebuts de fabrication. Le fait d'ajouter cette poudre de recyclage après broyage du premier mélange, permet d'autoriser des taux de recyclage importants. Toutefois, la quantité de poudre de recyclage ajoutée représente de préférence au plus 15 % en masse du second mélange.

De préférence, cette poudre est obtenue par broyage des pastilles mises au rebut ; ce broyage peut être réalisé pendant au moins 6 h dans un broyeur à boulets d'uranium allié, par exemple d'uranium-titane, et la poudre obtenue est tamisée à une dimension d'au plus 150 µm.

D'autres caractéristiques et avantages de l'invention apparaîtront mieux à la lecture de la description qui suit donnée bien entendu à titre illustratif et non limitatif, en référence aux dessins annexés sur lesquels :
- les figures 1 et 2 déjà décrites sont des diagrammes représentant les étapes du procédé de fabrication de pastilles, selon l'art antérieur, et
- la figure 3 est un diagramme représentant les étapes du procédé de fabrication de pastilles conforme à l'invention dans sa première variante.
- les figures 4 et 5 représentent les observations microstructurales de pastilles MOX fabriquées selon le procédé de fabrication conforme à l'invention, dans sa première variante.
- Les figures 6 et 7 représentent les observations microstructurales de pastilles MOX fabriquées selon le procédé de fabrication de l'art antérieur dit procédé "MIMAS" standard (brevet FR-A.-2.622.343).

Les figures 8 et 9 représentent les observations microstructurales de pastilles MOX fabriquées selon le procédé de fabrication conforme à l'invention dans sa seconde variante.

Les figures 10 et 11 représentent les observations microstructurales de pastilles MOX fabriquées selon le procédé de fabrication dit procédé "COCA" standard de l'art antérieur.

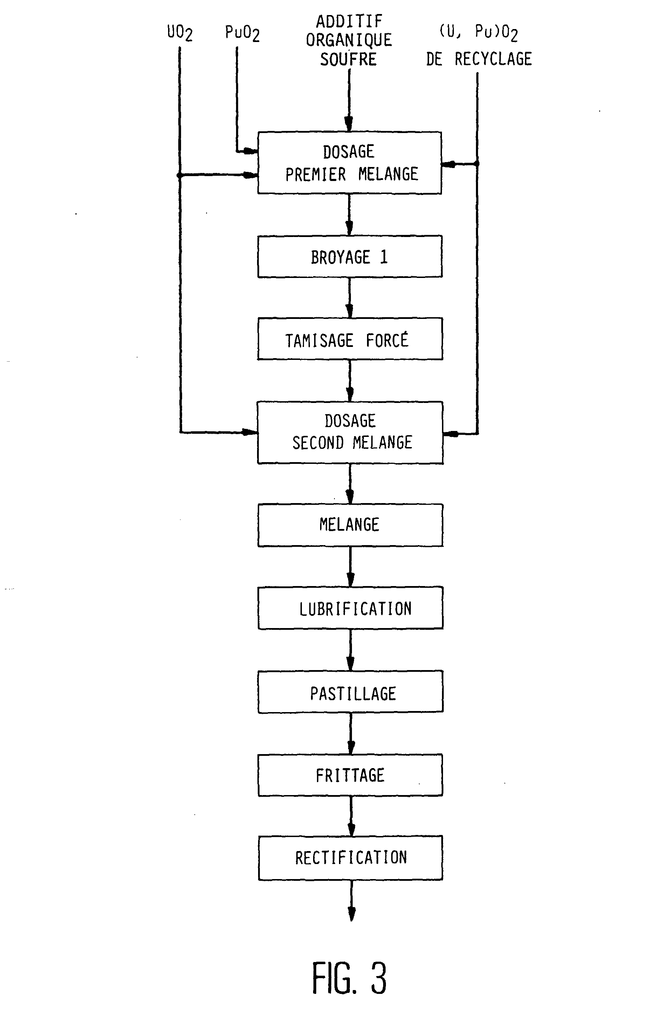

En se reportant à la figure 3, on voit que le procédé de l'invention, dans sa première variante, comprend trois étapes préalables qui conduisent à l'obtention d'un second mélange de poudres ayant la teneur en plutonium spécifiée, à partir duquel on réalisera ensuite le pastillage et le frittage.

La première étape consiste à doser des lots de poudre d'UO₂ et de PuO₂ pour obtenir un premier mélange ayant la composition isotopique voulue, mais une teneur en plutonium supérieure à la teneur spécifiée en respectant une certaine homogénéité. Ceci ne peut être obtenu que grâce à la connaissance préalable des caractéristiques de tous les lots de poudre de PuO₂ utilisés. Pour ce dosage, on pèse les différents constituants avec une précision relative supérieure au millième pour former un mélange de poudres de PuO₂ et d'UO₂ ayant une teneur en plutonium supérieure à la teneur spécifiée, mais dont l'enrichissement en plutonium est de préférence toujours supérieur à 25 % en masse, notamment entre 25 et 30 % en masse. L'additif organique est ensuite ajouté à une concentration comprise de préférence entre 0,1 et 1 % en masse.

Cet additif organique soufré est selon l'invention ajouté à l'état solide.

Cet additif se présente sous la forme d'une molécule polarisée spécifique, notamment une molécule de type zwitterion, comme par exemple le diméthyl-dodécylammonio-propane sulfonate de formule brute C₁₇H₃₇NO₃S étant préféré. Le procédé revendiqué, au contraire du procédé décrit dans le brevet GB-A-2 019 824 introduit l'additif organique soufré à l'état solide lors de l'étape de cobroyage à sec du premier mélange, l'introduction d'ajout en voie liquide étant à éviter dans la fabrication des mélanges UO₂-PuO₂ pour des raisons de sûreté-criticité. En effet, les produits hydrogénés (tels que l'eau) ont un effet modérateur, c'est-à-dire qu'ils peuvent favoriser une réaction de fission en chaîne non contrôlée (accident de criticité).

La molécule d'additif organique soufré à l'état solide de type zwitterion a de plus un fort poids moléculaire et présente la faculté inattendue de s'adsorber facilement en surface des poudres UO₂ et PuO₂, et de jouer un véritable rôle de lubrifiant ce qui permet d'améliorer et de faciliter de manière surprenante le broyage de la poudre. Ainsi, un mélange satisfaisant par simple broyage mécanique de l'élément soufré peut être réalisé, et le mélange obtenu présente une grande homogénéité.

De ce fait les pastilles préparées ont une meilleure aptitude à la dissolution en particulier à la dissolution nitrique, que par exemple, les pastilles préparées par un procédé ne mettant pas en oeuvre l'additif organique soufré solide zwitterion selon l'invention, ou mettant en oeuvre un autre additif soufré.

De plus, l'additif soufré à l'état solide présente l'avantage supplémentaire de pouvoir être incorporé en très faible quantité par exemple une concentration massique de 0,1 à 1 % en C₁₇H₃₇NO₃S équivaut à introduire 95 à 950 ppm de l'élément soufré dans les poudres broyées, ce qui répond aux conditions de sûreté nucléaire.

Les poudres de PuO₂ peuvent le cas échéant être calcinées avant d'être introduites dans le mélange. Elles présentent généralement une granulométrie moyenne de 0,5 à 40 µm et proviennent des installations de retraitement de combustibles irradiés. Les poudres d'UO₂ utilisées peuvent avoir des granulométries moyennes de 50 à 1000 µm. Elles sont généralement obtenues par procédé chimique à partir de nitrate d'uranyle ou d'hexafluorure d'uranium, ou par voie sèche à partir d'hexafluorure d'uranium.

Après dosage du premier mélange de poudres UO₂, PuO₂, additif organique soufré, on procède à la deuxième étape de broyage qui permet d'homogénéiser ce premier mélange et d'obtenir une poudre plus fine. Ceci est généralement effectué dans un broyeur à boulets en matériau dur, par exemple en uranium métallique ou allié, ou en acier. Ce broyeur peut avoir par exemple un volume de 60 l et une charge de boulets de 350 kg. Généralement, on réalise le broyage pendant des durées allant de 3 à 6 heures. L'opération de broyage forme des agglomérats conduisant à un spectre granulométrique très étalé des mélanges issus du broyeur qui vont de quelques µm à plus de 1 mm.

Tout autre type de broyeur peut être utilisé pour cette opération de broyage, par exemple un broyeur à attrition ou un broyeur à jet d'air.

Les étapes de dosage et de broyage selon la seconde variante du procédé ne se différencient de la première variante que par le fait que dans la première étape de dosage, on mélange directement les quantités voulues de poudres d'UO₂ et de PuO₂ et éventuellement de recyclage pour obtenir la teneur de plutonium spécifiée qui est de préférence comprise entre 1 % et 10 % en masse.

La deuxième étape de broyage est réalisée, selon la seconde variante du procédé, de la même manière que dans le procédé selon la première variante, la charge de poudre obtenue à l'issue de ce broyage étant soumise aux opérations de lubrification, de pastillage, et éventuellement de rectification dans les mêmes conditions que pour la première variante du procédé. Dans le procédé selon la seconde variante, la poudre broyée issue de la deuxième étape peut éventuellement subir un traitement de granulation, c'est le cas par exemple et notamment, si la coulabilité de la poudre broyée est insuffisante pour assurer une alimentation dans de bonnes conditions des appareils de pastillage, alors cette poudre broyée doit être transformée en un produit plus dense et grossièrement sphérique communément appelé granulé qui est obtenu généralement par compactage puis fractionnement dans des concasseurs et tamisage, conduisant à un intervalle de granulométrie déterminé. Ce traitement de granulation est connu de l'homme du métier dans ce domaine de la technique et les conditions de sa mise en oeuvre pourront être facilement déterminées.

L'étape suivante selon la première variante du procédé selon l'invention consiste à effectuer un tamisage forçage du mélange à travers un tamis ayant des ouvertures de dimension inférieure ou égale à 250 µm (microns) afin de retenir la fraction ayant une granulométrie inférieure ou égale à 250 µm.

Cette opération permet de calibrer les dimensions de la poudre et d'obtenir ainsi une poudre présentant les caractéristiques voulues pour être pastillée.

En effet, comme indiqué ci-dessus, les spectres granulométriques des poudres mélangées dans des broyeurs à boulets sont généralement très étalés et vont de quelques µm à plus d'1 mm. Par passage forcé dans un tamis ayant des ouvertures de dimensions inférieures ou égales à 250 µm, on élimine les plus gros agglomérats et on recueille ainsi la poudre calibrée utilisable pour les étapes postérieures.

Après cette opération, on procède au dosage du second mélange de poudres en ajoutant de la poudre d'UO₂ au premier mélange de poudres broyé et calibré, ceci revient à diluer le premier mélange de poudres broyé et calibré par de l'UO₂ pour obtenir un second mélange de poudres ayant la teneur spécifiée en plutonium. Dans cette étape, on pèse la poudre de UO₂ ajoutée avec une précision relative supérieure au 1/1000.

Dans cette étape, on peut aussi ajouter de la poudre de (U, Pu) O₂ (chamotte) provenant du recyclage des rebuts de fabrication. La poudre de recyclage ajoutée doit avoir de préférence des caractéristiques isotopiques (teneur en plutonium) identiques à celles des pastilles à préparer afin de pouvoir être ajoutée sans précautions particulières. On peut toutefois utiliser une poudre de recyclage ayant des caractéristiques isotopiques voisines. Lorsque la poudre de recyclage provient des rebuts de fabrication de la charge en cours, ceci ne pose aucun problème. Lorsqu'elle provient d'autres recyclages, on tient compte de ses caractéristiques physico-chimiques pour réaliser un dosage conforme aux caractéristiques des pastilles à préparer. Comme on l'a vu précédemment, la poudre de recyclage peut être obtenue par broyage des pastilles rebutées, pendant au moins 6 heures, dans un broyeur à boulets d'uranium-titane et elle est tamisée par passage dans un tamis dont les ouvertures ont au plus 150 µm.

L'étape suivante consiste à réaliser le mélange de l'ensemble obtenu après le dosage par un mélangeur généralement du type mélangeur à socs pendant une durée comprise généralement entre 15 et 30 minutes. Tout autre type de mélangeur peut être utilisé, notamment un mélangeur conique à vis.

Conformément au procédé selon l'invention dans sa première variante, cette étape de mélange consiste en fait en un simple brassage mécanique qui s'avère suffisant pour obtenir après pastillage et frittage des pastilles de combustible répondant aux spécifications exigées et présentant toutes les propriétés caractéristiques améliorées des pastilles de l'invention. Il n'est pas nécessaire de recourir à une seconde opération de broyage difficile à mettre en oeuvre et forte consommatrice d'énergie ; cela provient conformément à l'invention, comme déjà mentionné plus haut, de l'addition d'un produit organique soufré solide de type zwitterion dans l'étape a) qui améliore notablement l'homogénéité de la répartition du plutonium au sein du mélange. Les granulés d'UO₂ conservant leur intégrité, la totalité de la charge destinée au pastillage est de ce fait devenue coulable, facilitant le remplissage des matrices lors de l'étape ultérieure de pressage.

Les étapes suivantes de lubrification avec addition éventuelle d'un agent porogène, pastillage, frittage, et rectification sont réalisées de manière connue comme par exemple dans le brevet français FR-A-2 424 231 et sont réalisées de la même manière et dans les mêmes conditions pour la première et la seconde variantes du procédé selon l'invention.

L'étape de lubrification peut être réalisée ensuite en utilisant par exemple comme lubrifiant du stéarate de zinc ou de calcium dans une proportion inférieure ou égale à 0,5 % en masse. On peut effectuer le mélange en une ou plusieurs opérations successives, en utilisant une durée de mélange qui dépend du matériel utilisé. Cette durée est choisie de façon à conférer au mélange une homogénéité satisfaisante. Le lubrifiant utilisé, par exemple le stéarate de zinc, est préalablement étuvé puis tamisé au tamis de 50 µm pour éliminer les agglomérats.

Dans le cas où la densité des pastilles frittées obtenues à partir de cette charge de poudres est trop élevée par rapport aux spécifications requises, on ajoute à la poudre un agent porogène, par exemple de l'azodicarbonamide.

Dans ce cas, on introduit l'agent porogène en même temps que le lubrifiant en le mélangeant préalablement à ce dernier dans les proportions adéquates, après l'avoir étuvé et tamisé par passage dans un tamis dont l'ouverture de mailles est de 50 µm. La teneur en agent porogène peut aller de 0,01 à 0,5 % en masse du mélange de poudres.

L'étape de pastillage peut être effectuée en utilisant une presse hydraulique dont les paramètres ont été optimisés et contrôlés, et en suivant les caractéristiques géométriques et d'aspect des pastilles obtenues par des prélèvements réguliers. Les pastilles conformes aux spécifications sont chargées directement en vrac dans des nacelles de frittage en limitant au strict minimum les chocs et les frottements et en contrôlant la quantité de pastilles par nacelle pour qu'elle soit pratiquement la même dans chacune des nacelles.

L'étape de frittage est réalisée dans les meilleurs délais après le pastillage, de façon à limiter les effets de la radiolyse du lubrifiant et éventuellement de l'agent porogène sur les pastilles crues.

Le frittage est réalisé comme dans l'art antérieur, à une température de 1650 à 1750°C, de préférence de 1670 ± 20°C, en atmosphère de gaz réducteur, par exemple dans un mélange hydrogène-argon contenant 7 % d'hydrogène. De préférence, l'atmosphère de frittage est humidifiée de façon à améliorer la diffusion métallurgique des matériaux en présence et à stabiliser le rapport O/M de l'oxyde mixte à une valeur voisine de 2,00.

Le rapport H₂O/H₂ de l'atmosphère de frittage sera néanmoins limité et contrôlé afin d'éviter les oxydations des éléments chauffants et des nacelles de frittage qui sont généralement en molybdène.

Après frittage, on peut soumettre les pastilles à une rectification qui peut être effectuée sur une rectifieuse sans centre et à sec, afin d'obtenir des pastilles satisfaisant à la spécification de diamètre.

Les pastilles obtenues par le procédé selon l'invention dans sa première variante présentent généralement les caractéristiques suivantes :
- une taille de grain élevée et bimodale. La taille de grains est évaluée sur micrographies obtenues par microscopie optique sur pastille préalablement tronçonnée, polie et ayant subi une attaque chimique. Des attaques chimiques sélectives permettent d'évaluer la taille de grains dans les zones à fortes teneurs en plutonium. Dans ces zones affectées par la présence de l'additif organique soufré, on mesure une taille de grains élevée supérieure à 20 µm, le reste de la pastille présente quant à elle une taille de grains classique ne dépassant pas 10 µm,
- une aptitude à la dissolution très satisfaisante. La quantité de plutonium insoluble après dissolution de la pastille dans une solution aqueuse d'acide nitrique 10N bouillant durant 10 heures rapportée à la quantité totale de plutonium quantifie cette propriété. Le rapport Pu insoluble/Pu total est inférieur ou égal à 0,25 % en masse,
- une teneur en soufre résiduelle dans les pastilles inférieure à 20 ppm massique.

Les pastilles obtenues par le procédé selon l'invention dans sa deuxième variante présentent généralement des caractéristiques sensiblement analogues, la taille de grains élevée étant obtenue sur l'ensemble de la pastille, alors que dans le procédé comparable décrit par exemple dans le brevet japonais JP-A-62 115 398 la pastille présente des grains de faible diamètre en surface et des gros grains dans le coeur.

Les exemples suivants, donnés à titre illustratif et non limitatif illustrent les résultats obtenus par mise en oeuvre du procédé de l'invention dans sa première variante (Exemple 1) et dans sa seconde variante (Exemple 2).

### EXEMPLE 1 :

On dose tout d'abord le premier mélange constitué par une charge de 330 g ayant une teneur en plutonium de 25 % massique auquel on ajoute 0,6 % massique de diméthyl-dodécylammoniopropanesulfonate (C₁₇H₃₇NO₃S).

On soumet ce premier mélange à un broyage en jarre à boulets d'uranium d'une durée de 3 heures. Le mélange primaire issu du broyage est tamisé-forcé au travers d'un tamis dont les ouvertures ont une dimension de 250 µm. Le mélange calibré est ensuite dilué par brassage mécanique dans un mélangeur à socs durant 30 minutes avec la même poudre d'UO₂ pour obtenir un second mélange d'UO₂ et de PuO₂ ayant une teneur en PuO₂ de 6 %.

0,3 % massique de porogène (Azodicarbonamide) puis 0,3 % massique de lubrifiant (Stéarate de zinc) sont mélangés à la poudre par brassage mécanique. La totalité de la poudre est ensuite pastillée en utilisant une presse hydraulique double effet sous une pression de 500MPa. On soumet ensuite les pastilles obtenues à un frittage à 1700°C sous atmosphère d'argon hydrogéné (5 % H₂) et humidifié avec 2500 ppm d'eau.

Les pastilles obtenues présentent les caractéristiques suivantes :
- taille de grains des zones riches en plutonium variant de 20 à 50 µm, le reste de la pastille présentant une taille de grains de 5 à 9 µm,
   - une aptitude à la dissolution nitrique telle que Pu insoluble/Pu total = 0,25 % massique,
   - une teneur en soufre résiduelle inférieure à la limite de détection de l'analyseur, soit 20 ppm.

A titre de comparaison, des pastilles frittées obtenues selon le procédé de fabrication de l'art antérieur selon le document FR-A-2.626.343 présentent une taille de grains de 2 à 8 µm pour les zones riches en plutonium et de 5 à 10 µm pour le reste de la pastille.

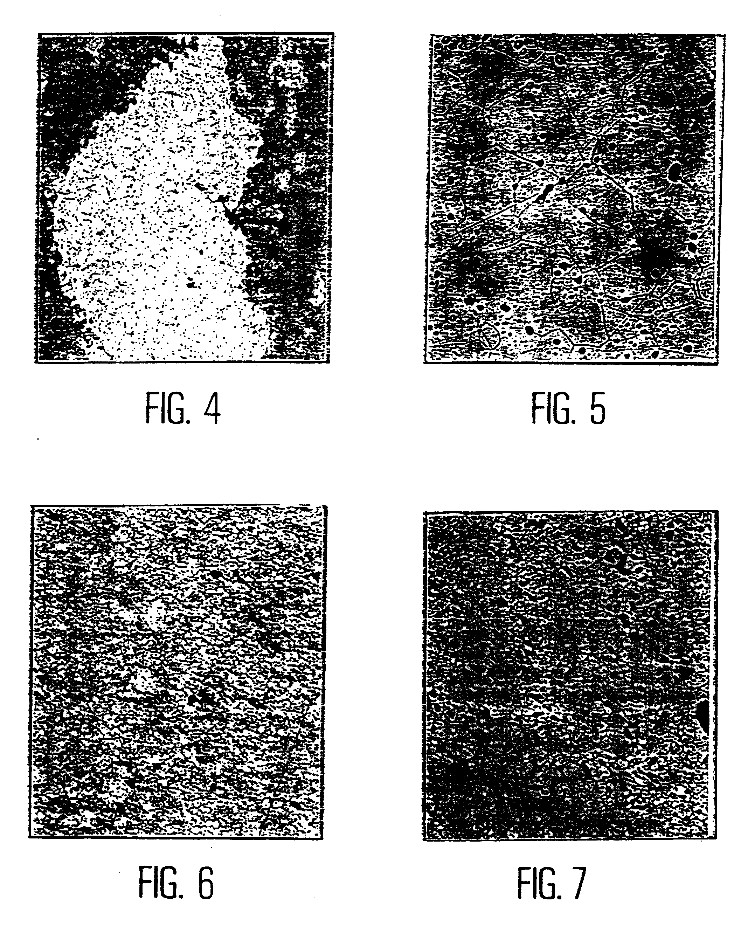

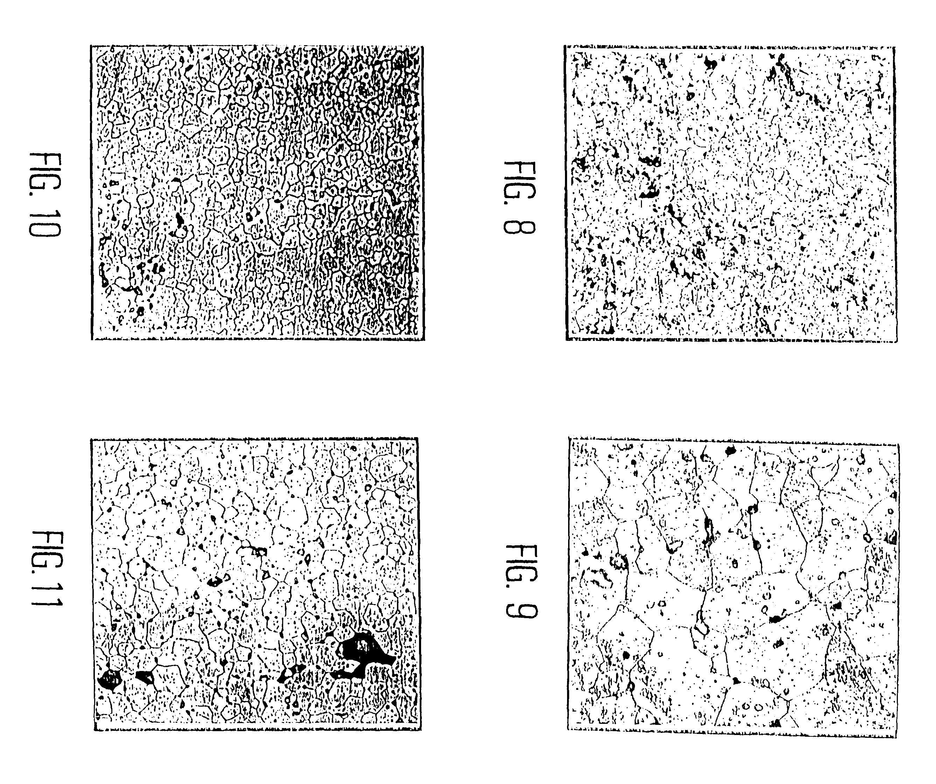

Les 2 types de microstructures sont présentés respectivement sur les figures 4 et 5 pour la présente invention et sur les figures 6 et 7 pour l'art antérieur.

### EXEMPLE 2 :

On dose une charge de poudre de 334 g ayant une teneur en PuO₂ de 6 % et constituée d'un mélange de PuO₂, d'UO₂, de poudre de recyclage à hauteur de 4 % massique. L'additif organique soufré Diméthyl-dodécylammonio-propanesulfonate (C₁₇H₃₇NO₃S) est ajouté à hauteur de 0,6 % massique. Ce mélange est broyé dans les mêmes conditions que dans l'exemple 1. Le mélange est ensuite directement lubrifié et pastillé. La taille de grains évaluée sur l'ensemble de la pastille frittée varie alors de 20 à 40 µm. A titre de comparaison, des pastilles fabriquées de façon identique, mais sans additif organique soufré dans le broyeur, présentent une taille de grains de 6 à 14 µm.

Les deux types de microstructures sont présentés respectivement sur les figures 8 et 9 pour la présente invention sur les figures 10 et 11 pour l'art antérieur.

Les pastilles préparées par cette seconde variante du procédé selon l'invention, ne présentent pas les désavantages des pastilles obtenues par le procédé correspondant de l'art antérieur tels que fissuration, défauts d'aspects, ... De ce fait, ces pastilles peuvent être rectifiées sans inconvénient.

Ainsi le procédé selon l'invention permet non seulement d'obtenir des pastilles répondant à l'ensemble des spécifications communément exigées des pastilles de combustible nucléaire à base d'oxyde mixte (U, Pu)O₂, à savoir notamment une bonne aptitude à la dissolution, des densités et porosités adéquates, une excellente aptitude à la rectification à sec sans apparition de fissures, mais aussi grâce à l'addition d'un composé soufré, une taille de grains plus élevée notamment dans les zones à forte teneur en plutonium permettant une meilleure rétention des gaz de fission. En revanche, les procédés de l'art antérieur donnent des tailles de grain nettement plus faibles favorisant l'échappement des gaz de fission, et les pastilles obtenues par les procédés de l'art antérieur ont une aptitude à la dissolution, en particulier à la dissolution nitrique nettement inférieure.

Les excellents résultats et améliorations sont obtenus en mettant en oeuvre le procédé selon l'invention aussi dans sa première variante que dans sa seconde variante.

## Revendications

1. Procédé de fabrication de pastilles de combustible nucléaire à base d'oxyde mixte d'uranium et de plutonium ayant une teneur spécifiée en plutonium, à partir d'une charge de poudres d'UO₂ et de PuO₂ par lubrification, pastillage et frittage dans lequel la charge de poudre soumise à la lubrification, au pastillage et au frittage est préparée par les étapes successives suivantes :
a) dosage d'un premier mélange de poudres d'UO₂ et de PuO₂ ayant une teneur en plutonium supérieure à la teneur spécifiée, un produit organique soufré solide étant incorporé dans le mélange,
b) broyage de ce premier mélange de poudres,
c) tamisage forcé de ce mélange broyé à travers un tamis ayant des ouvertures de dimension inférieure ou égale à 250 µm,
d) addition d'une poudre d'UO₂ à ce premier mélange de poudres broyées pour obtenir un second mélange de poudres ayant la teneur spécifiée en plutonium, et
e) mélange de l'ensemble de la charge pour recueillir la charge de poudre qui sera soumise aux opérations de lubrification, de pastillage, de frittage,
caractérisé en ce que le produit organique soufré solide incorporé dans le mélange au cours de l'étape a) est un zwitterion, et en ce que l'étape e) de mélange de la charge est un simple brassage.

2. Procédé de fabrication de pastilles de combustible nucléaire à base d'oxyde mixte d'uranium et de plutonium ayant une teneur spécifiée en plutonium, à partir d'une charge de poudre d'UO₂ et de PuO₂ par lubrification, pastillage et frittage dans lequel la charge de poudres soumise à la lubrification, au pastillage et au frittage est préparée par les étapes successives suivantes :
a) dosage d'un premier mélange de poudres d'UO₂ et de PuO₂ ayant la teneur en plutonium spécifiée, un produit organique soufré solide étant incorporé dans le mélange,
b) broyage de ce premier mélange de poudres,
caractérisé en ce le produit organique soufré solide incorporé dans le mélange au cours de l'étape a) est un zwitterion.

3. Procédé selon la revendication 1, caractérisé en ce que la teneur en plutonium du premier mélange est supérieure à 25 % en masse.

4. Procédé selon la revendication 2, caractérisé en ce que la teneur en plutonium du premier mélange est comprise entre 1 et 10 % en masse.

5. Procédé selon la revendication 1 ou 2, caractérisé en ce que dans l'étape a) et/ou dans l'étape d), on ajoute également une poudre d'oxyde mixte (U, Pu)O₂ de recyclage ayant la teneur spécifiée en plutonium, obtenue par broyage des rebuts de fabrication.

6. Procédé selon la revendication 1, caractérisé en ce que le mélange de l'étape e) est réalisé dans un mélangeur conique à vis.

7. Procédé selon la revendication 1, caractérisé en ce que le mélange de l'étape e) est réalisé dans un mélangeur à socs.

8. Procédé selon la revendication 1 ou 2, caractérisé en ce que le broyage de l'étape b) est réalisé dans un broyeur à boulets pendant 3 à 6 heures.

9. Procédé selon la revendication 1 ou 2, caractérisé en ce que le produit organique soufré est incorporé à une concentration de 0,1 à 1 % en masse.

10. Procédé selon la revendication 5, caractérisé en ce que la quantité de poudre de recyclage ajoutée représente au plus 15 % en masse du mélange.

11. Procédé selon l'une quelconque des revendications 5 et 10, caractérisé en ce que la poudre de recyclage est constituée de particules ayant des granulométries inférieures ou égales à 150 µm.

12. Procédé selon la revendication 1 ou 2, caractérisé en ce que le produit organique soufré solide est le diméthyl-dodécylammonio-propane sulfonate.

13. Procédé selon la revendication 1 ou 2, caractérisé en ce qu'un agent porogène est incorporé à la charge de poudres lors de la lubrification.

14. Procédé selon la revendication 1 ou 2, caractérisé en ce que l'on réalise le pastillage au moyen d'une presse hydraulique.

15. Procédé selon la revendication 1 ou 2, caractérisé en ce que l'on réalise le frittage à une température de 1650 à 1690°C en atmosphère hydrogénée, éventuellement humidifiée.

16. Procédé selon la revendication 1 ou 2, caractérisé en ce que l'on soumet les pastilles frittées à une rectification à sec.

## Patentansprüche

1. Verfahren zur Herstellung von Kernbrennstofftabletten auf der Basis von Uran-Plutonium-Mischoxid mit erhöhtem Plutoniumgehalt aus einer Charge von UO₂- und PuO₂-Pulvern durch Gleitfähigmachung, Tablettierung und Sinterung, in welchem die der Gleitfähigmachung, der Tablettierung und der Sinterung unterzogene Charge von Pulvern durch die folgenden, nacheinander ausgeführten Schritte hergestellt wird:
a) Abmessen einer ersten Mischung von UO₂- und PuO₂-Pulvern, die einen höheren als den spezifizierten Plutoniumgehalt hat, wobei ein festes schwefelhaltiges organisches Produkt in die Mischung eingebracht wird,
b) Zerkleinern dieser ersten Pulvermischung,
c) forciertes Sieben dieser zerkleinerten Mischung durch ein Sieb, welches Öffnungen einer Abmessung kleiner als oder gleich 250 µm hat,
d) Zugabe eines UO₂-Pulvers zu dieser ersten Mischung von zerkleinerten Pulvern, um eine zweite Pulvermischung zu erhalten, welche den spezifizierten Plutoniumgehalt hat, und
e) Mischen der Gesamtheit der Charge, um die Pulvercharge zu erhalten, die dann den Operationen der Gleitfähigmachung, der Tablettierung und der Sinterung unterzogen wird,
dadurch gekennzeichnet, daß das in die Mischung während Schritt a) eingebrachte feste schwefelhaltige organische Produkt ein Zwitterion ist und daß Schritt e) der Mischung der Charge eine einfaches Umrühren ist.

2. Verfahren zur Herstellung von Kernbrennstofftabletten auf der Basis von Uran-Plutonium-Mischoxid mit erhöhtem Plutoniumgehalt aus einer Charge von UO₂- und PuO₂-Pulvern durch Gleitfähigmachung, Tablettierung und Sinterung, in welchem die der Gleitfähigmachung, der Tablettierung und der Sinterung unterzogene Charge von Pulvern durch die folgenden, nacheinander ausgeführten Schritte hergestellt wird:
a) Abmessen einer ersten Mischung von UO₂- und PUO₂-Pulvern, die den spezifizierten Plutoniumgehalt hat, wobei ein festes schwefelhaltiges organisches Produkt in die Mischung eingebracht wird,
b) Zerkleinern dieser ersten Pulvermischung,
dadurch gekennzeichnet, daß das in die Mischung während Schritt a) eingebrachte feste schwefelhaltige organische Produkt ein Zwitterion ist.

3. Verfahren nach Anspruch 1, dadurch gekennzeichnet, daß der Plutoniumgehalt der ersten Mischung größer als 25 Massen-% ist.

4. Verfahren nach Anspruch 2, dadurch gekennzeichnet, daß der Plutoniumgehalt der ersten Mischung zwischen 1 und 10 Massen-% liegt.

5. Verfahren nach Anspruch 1 oder 2, dadurch gekennzeichnet, daß man in Schritt a) und/oder in Schritte d) ebenso ein Mischoxidpulver (U, Pu)O₂ zur Wiederverwertung hinzusetzt, das den spezifizierten Plutoniumgehalt hat und das durch Zerkleinerung der Herstellungsabfälle erhalten wurde.

6. Verfahren nach Anspruch 1, dadurch gekennzeichnet, daß die Mischung von Schritt e) in einem konischen Mischer mit Schraube ausgeführt wird.

7. Verfahren nach Anspruch 1, dadurch gekennzeichnet, daß die Mischung von Schritt e) in einem Mischer mit Pflugscharen ausgeführt wird.

8. Verfahren nach Anspruch 1 oder 2, dadurch gekennzeichnet, daß die Zerkleinerung von Schritt b) in einem Kugelmahlwerk innerhalb von 3 bis 6 Stunden ausgeführt wird.

9. Verfahren nach Anspruch 1 oder 2, dadurch gekennzeichnet, daß das schwefelhaltige organische Produkt in einer Konzentration von 0,1 bis 1 Massen-% eingebracht wird.

10. Verfahren nach Anspruch 5, dadurch gekennzeichnet, daß die zugefügte Menge an Pulver zur Wiederverwertung höchstens 15 Massen-% der Mischung darstellt.

11. Verfahren nach einem der Ansprüche 5 und 10, dadurch gekennzeichnet, daß das Pulver zur Wiederverwertung aus Partikeln besteht, die eine Körnung kleiner als oder gleich 150 µm haben.

12. Verfahren nach Anspruch 1 oder 2, dadurch gekennzeichnet, daß das feste schwefelhaltige organische Produkt Dimethyl-dodecylammonio-propan-sulfonat ist.

13. Verfahren nach Anspruch 1 oder 2, dadurch gekennzeichnet, daß bei der Gleitfähigmachung der Charge von Pulvern ein porenbildendes Mittel zugesetzt wird.

14. Verfahren nach Anspruch 1 oder 2, dadurch gekennzeichnet, daß man die Tablettierung mit Hilfe einer hydraulischen Presse ausführt.

15. Verfahren nach Anspruch 1 oder 2, dadurch gekennzeichnet, daß man die Sinterung bei einer Temperatur von 1650 bis 1690°C in wasserstoffhaltiger, gegebenenfalls befeuchteter Atmosphäre ausführt.

16. Verfahren nach Anspruch 1 oder 2, dadurch gekennzeichnet, daß man die gesinterten Tabletten im Trockenen einer Rektifikation unterzieht.

## Claims

1. Process for the production of nuclear fuel pellets based on mixed uranium and plutonium oxide having a specified plutonium content, from a UO₂ and PuO₂ powder charge by lubrification, pelletizing and sintering, in which the powder charge subject to lubrification, pelletizing and sintering is prepared by the following successive stages:
a) dosing a first mixture of UO₂ and PuO₂ powders having a plutonium content higher than the specified content, an organic, solid, sulphur product being incorporated into the mixture,
b) milling said first mixture of powders,
c) forced screening of said milled mixture through a screen having openings with a size equal to or smaller than 250 µm,
d) addition of a UO₂ powder to said first mixture of milled powders to obtain a second mixture of powders having the specified plutonium content and
e) mixing the complete charge for collecting the powder charge which is to undergo the lubrification, pelletizing and sintering operations,
characterized in that the solid, organic, sulphur product incorporated into the mixture during stage a) is a zwitterion and in that stage e) of mixing the charge is a simple stirring operation.

2. Process for the production of nuclear fuel pellets based on mixed uranium and plutonium oxide having a specified plutonium content, from a UO₂ and PuO₂ powder charge by lubrification, pelletizing and sintering, in which the powder charge subject to lubrification, pelletizing and sintering is prepared by the following successive stages:
a) dosing a first mixture of UO₂ and PuO₂ powders having the specified plutonium content, an organic, solid, sulphur product being incorporated into the mixture,
b) milling said first mixture of powders,
characterized in that the solid, organic, sulphur product incorporated into the mixture during stage a) is a zwitterion.

3. Process according to claim 1, characterized in that the plutonium content of the first mixture exceeds 25 wt.%.

4. Process according to claim 2, characterized in that the plutonium content of the first mixture is between 1 and 10 wt.%.

5. Process according to claim 1 or 2, characterized in that in stage a) and/or in stage d), addition also takes place of a mixed (U, Pu)O₂ recycling oxide powder having the specified plutonium content obtained by milling production waste.

6. Process according to claim 1, characterized in that the mixing of stage e) is performed in a conical screw mixer.

7. Process according to claim 1, characterized in that the mixing of stage e) is performed in a ploughshare mixer.

8. Process according to claim 1 or 2, characterized in that the milling of stage b) is performed in a ball mill for 3 to 6 hours.

9. Process according to claim 1 or 2, characterized in that the organic, sulphur product is incorporated in a concentration of 0.1 to 1 wt.%.

10. Process according to claim 5, characterized in that the added recycling powder quantity represents at the most 15 wt.% of the mixture.

11. Process according to any one of the claims 5 and 10, characterized in that the recycling powder is constituted by particles having grain sizes equal to or below 150 µm.

12. Process according to claim 1 or 2, characterized in that the organic, sulphur, solid product is dimethyl-dodecylammoniopropane sulphonate.

13. Process according to claim 1 or 2, characterized in that a gas developing agent is incorporated into the powder charge during lubrification.

14. Process according to claim 1 or 2, characterized in that pelletizing takes place with a hydraulic press.

15. Process according to claim 1 or 2, characterized in that sintering takes place at a temperature of 1650 to 1690°C in an optionally humidified, hydrogenated atmosphere.

16. Process according to claim 1 or 2, characterized in that the sintered pellets undergo dry grinding.
